# EUROPEAN PATENT SPECIFICATION

(11) **EP 0 621 675 B1**
(45) Date of publication and mention of the grant of the patent: **27.01.1999**
(21) Application number: 94104483.6
(22) Date of filing: 22.03.1994
(51) Int. Cl.: H02J 7/16, B60R 16/02

(54) **Electronic circuit preventing the discharge of a motor vehicle battery**
Elektronischer Schaltkreis zum Verhindern der Entladung einer Kraftfahrzeugbatterie
Circuit électronique empêchant la décharge d'un accumulateur d'automobile

(30) Priority: 20.04.1993 IT TO930264
(43) Date of publication of application: 26.10.1994
(73) Proprietor: FIAT AUTO S.p.A., 10135 Torino (IT)
(72) Inventor: Jacoponi, Stefano, I-10100 Torino (IT); Di Nunzio, Vittorio, I.10100 Torino (IT)
(74) Representative: Lotti, Giorgio

(56) References cited:
- EP-A- 0 055 149
- WO-A-90/02670
- WO-A-90/07218
- WO-A-92/22112
- WO-A-93/12568
- FR-A- 2 511 205
- US-A- 3 585 490
- US-A- 4 902 956

## Description

This invention refers to an electronic circuit of a device which guarantees to a motor vehicle battery the minimum charge reserve necessary to start the engine.

It is well known that in the last few years the level of optionals offered on motor vehicles is very high. It is sufficient to think about the electric movement of the seats, of the side mirrors, of the windscreen wipers, of the sun roof, and to think about car radio systems etc. This necessitates the use of electric actuators, working continually or intermittently, which represent an ever increasing load on the on board power energy generation and storage system.

It is just as well known that the dimensions of said system, comprising an alternator and a battery, are decided according to the principle, which is certainly valid even in theory, that the battery must be capable of guaranteeing engine start up in all climatic conditions, while the alternator must guarantee the average load curve, with the help of the buffer battery for peak loads. It has to be guaranteed, however, that the battery electric balance is substantially balanced. Otherwise the battery would run down sooner or later, usually without any consequences during operation, but becoming impossible or difficult to start the engine after a stop, especially if it is prolonged and in winter temperatures.

Electronic circuits which guarantee that a battery of a motor vehicle has a minimum charge reserve necessary to start an engine and also that a relay disconnects the battery from a load node for certain voltage values of the battery are known.

For example, EP-A-0 055 149 discloses an electronic circuit comprising a feed circuit with a zone for the switching of a battery from a load node to an alternator excitation node and vice-versa and a control circuit, which switches a relay for certain voltage levels of the load node.

Further, from US-A-4,902,956 is known a device that, when the state of charge of a battery falls below preset values, activates a switch, which disconnects the battery from the vehicle wiring circuit, in order to save sufficient energy to the battery for engine ignition.

Moreover, WO-A-90 02 670 discloses an electrical supply control system for a motor vehicle, in which the battery voltage is compared with two reference values of voltage. The battery is isolated from the electrical system in response to low battery signal to preserve some battery charge an is reconnected by The drivel on return on the vehicle.

However, electronic circuits of the type described above have some drawbacks, due to the fact that, on the basis of the dimension criteria in use today, when the electric balance relating to the battery is not balanced, but it is negative (according to the judgment levels and criteria which can vary from manufacturer to manufacturer), it is necessary to adopt a larger alternator, thus accepting the consequent increase in cost and weight. Nevertheless it has to be pointed out that the assessment of the electric balance is carried out at extreme operational conditions, i.e. at low average speed of the vehicle (urban drive) and at the maximum permissible load for the type of test cycle in question (summer/winter). It follows that, at present, as the electric balance to the battery must be guaranteed for extreme operational conditions, it is necessary to use an alternator which is oversized for most of the situations during the vehicle's operating time, which fact

is paid for in terms of cost, weight and operating efficiency.

Moreover, if preferred loads, such as electronic injection apparatus or ABS devices, are provided, they are generally connected to the contact of the ignition key of the motor vehicle.

Also, if known electronic protection circuits are used, it is not possible to feed said loads directly from the battery, without the battery voltage falling below a minimum charge reserve necessary to start the engine after a stop.

The electronic circuit, the subject of this invention, allows the dimensions of the generation and storage system to be optimized, since it provides for, according to the logics which will be further described below, the monitoring of the battery capacity and the temporary disengagement of the battery from the main node to the excitation node if it goes below a certain level due to use in extreme conditions. By doing this the battery does not suffer any further significant discharge and the alternator works according to output characteristics typical of separate excitation, rather than derived, with a clear improvement in functionality on loads at voltages lower than the rated voltage as will be shown later on. If the extreme conditions of use continue, the battery will remain substantially disconnected and therefore will not run down any further.

Therefore the battery can guarantee starting after a stop.

On the other hand, whenever extreme conditions of use cease, for example on a fast road, and engine revolutions rise, the device, after a suitable time, reconnects the battery to the main node and possibly allows further charging of the battery itself.

Moreover, the electric circuit according to the present invention allows to feed preferred loads, such as electronic injection apparatus or ABS devices, directly from the battery of the motor vehicle, without the battery voltage falling below a minimum charge reserve. All these purposes are achieved by an electronic circuit according to claim 1.

The structural and functional characteristics and advantages of a device according to this invention will be better understood by the detailed not restrictive description which refers, by way of example only, to the enclosed schematic drawings in which:

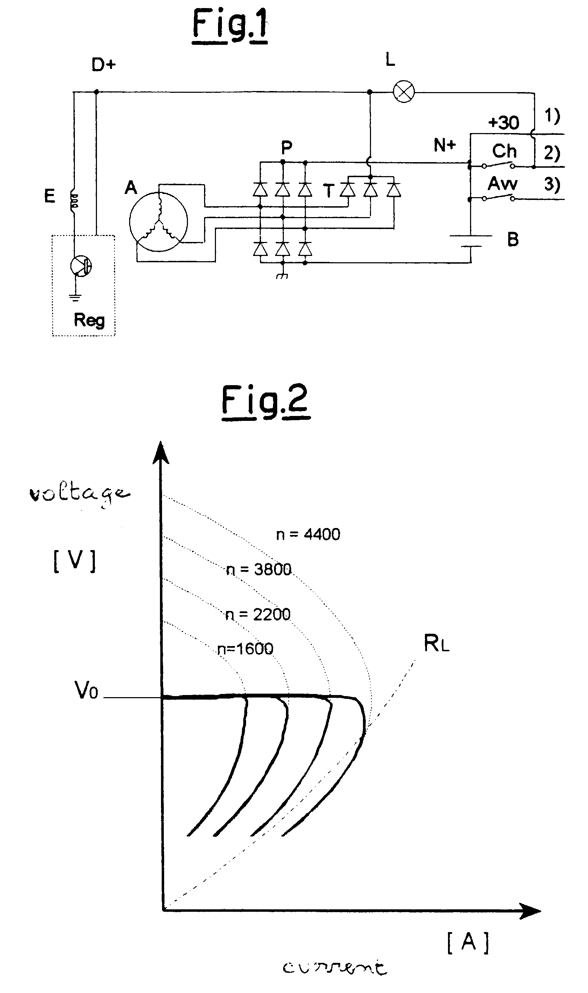

Figure 1 is a or very well known diagram of an energy generation/storage system on board a motor vehicle where:
   - A: shows a three phase alternator driven by means of belts and pulleys by a drive shaft according to a known transmission ratio;
   - P: is a three phase power rectifier bridge;
   - T: is a set of three diodes for the excitation voltage;
   - E: is an alternator excitation winding;
   - Reg: is a static voltage regulator;
   - B: is a buffer battery;
   - L: is a generator warning light;
   - Ch: is an ignition switch;
   - Avv: is an ignition switch in its start position;
Figure 2 is a qualitative diagram of the derived excitation characteristics for different rotation speeds of the alternator;
Figure 3 is a diagram referring to separate excitation;
Figure 4 represents the diagram of the car system of figure 1, with the insertion of the power part of the device capable of guaranteeing that the car battery has a minimum energy reserve to start the engine; said part is enclosed by a dashed line and is marked by an X.
Figure 5 is a circuit representing a circuit solution exemplifying a battery voltage check and the control of the X area in the system of figure 4.

With reference to figure 1 it can be observed that a battery B, the rectified voltage of an alternator A and all the loads of the lines shown by 1), 2) and 3) converge on the N+ node.

To line 1) there are connected all the loads the insertion of which is controlled by specific commands and not by the position of the ignition key.

On the line 2) there are all the loads controlled by the ignition key (the so called under key) which loads depend on the position of the switch Ch.

On the line 3) there is the starter circuit, for example an electromagnet.

Converging onto the D+ node there is the output of the bridge rectifier T, of a winding E which represents the alternator A excitation, as well as the generator warning lamp L and the feed for a static voltage regulator Reg.

Before describing the circuit which is the subject of this invention, it is appropriate to mention the feed characteristics of the alternator A which differ according to whether the excitation is derived as in figure 1 or independent. In the second case the battery B has to be considered disconnected from the N+ node and connected to the D+ node. The qualitative diagram of the derived excitation characteristics for different rotation speeds of the alternator A are shown in figure 2.

The presence of a voltage regulator determines a substantially constant voltage output Vo, until the voltage is reduced and at the same time the current is reduced as typically occurs for a shunt excited alternator.

The characteristics enclosed by the dotted line correspond to the the hypothesis that the voltage regulator does not intervene to control the excitation current.

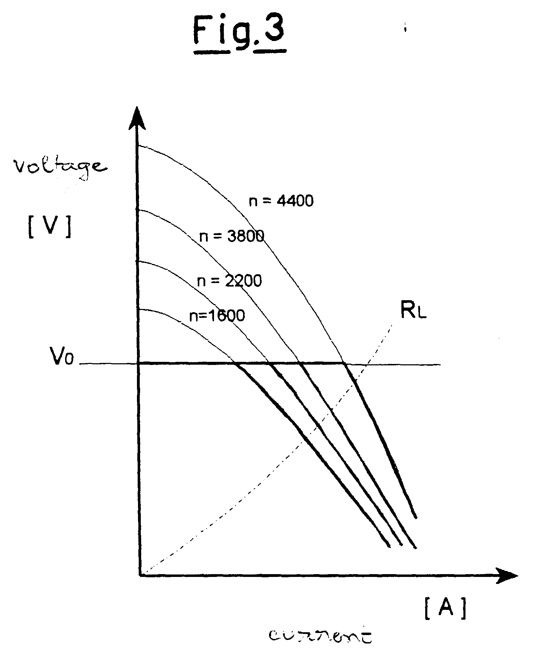

In figure 3 the curve with separate excitation are indicated. It can be observed how the curves of the characteristics in this second case, for voltages lower than the regulator intervention voltage VO, are much more favourable than the previous ones.

In fact the load line RL which integrates and represents all the loads connected to the N+ node, in the first case can determine voltages so low that the alternator A becomes de-energized. This on the other hand cannot happen in the second case, as the voltage can decrease to zero without the alternator A being de-energized.

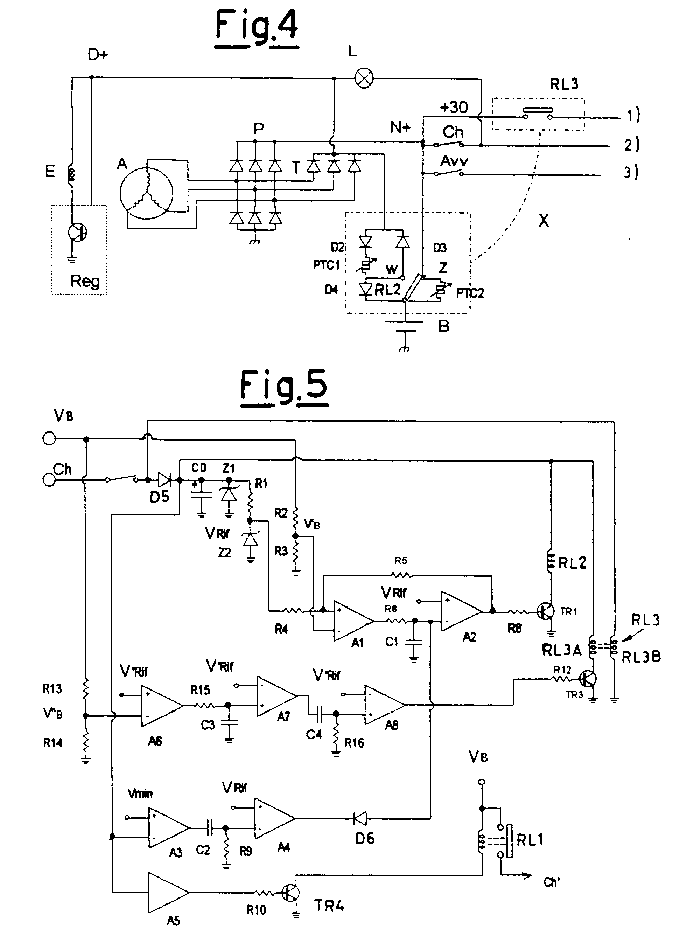

The circuit according to this invention is represented in figures 4 and 5.

Figure 4 shows the same circuit as figure 1 including the switching area X of the device, which in reality is physically integrated with the remaining part of the electronic circuit of figure 5 and is here reproduced for clarity.

The X area consists, so to say, of the power part of the device and in particular of a switching element of the battery B by means of a relay RL2 from the load node N+ to the excitation node D+ of the alternator A and vice versa, and a relais contact RL3 which function will be decribed later.

A suitable network of diodes D2, D3, D4 and of resistors PTC1, PTC2 sensible to the temperature is aimed to avoid voltage excursions during the switching of the relay RL2 from a first position Z to a second position W. The element or resistor PTC2 has the further aim of assisting the relay RL2 during operation, thus improving its duration. Further the element or resistor PTC1 has the aim of limiting the current flowing from the bridge T towards the battery B at a level that does not damage the bridge T itself.

With reference to figure 5 a control circuit is described which represents an example of a circuit solution for the electronic circuit according to the present invention. This circuit consists of two control groups for respectively the battery VB voltage level and the voltage level at the node N+, by means of which the switching of the relay RL2 is also driven. This circuit consists also of a further third control group to drive a third relay RL3. By means of the latter relay RL3, all the loads connected to the device can be in fact connected or disconnected when the battery voltage goes below a predetermined level. Finally the circuit includes a group for the addition of preferred loads.

The components, that is a diode D5, a capacitor CO and a first Zener diode Z1, represent the usual protection for motor vehicle applications, VB is the positive pole of the battery B, while CH indicates the ignition key switch.

By means of a second Zener Z2, the first reference voltage VRif is formed which is compared to a signal V'B directly proportional to the battery voltage VB, by means of a suitable voltage divider consisting of R2 and R3.

This comparison is carried out by a comparator Al which supplies a high output when the signal V'B, proportional to the battery voltage VB, is lower than the predetermined minimum, typically for VB = 12 + 12.2 Volts. Said output is suitably filtered by a network R6, Cl and compared to the same voltage reference VRif as above, in the comparator A2 which thus produces, by means of the drive of a transistor TR1, the timed excitation of a coil of relay RL2. The resistors R4, R5 represent an adequate hysteresis for the comparator A1, thanks to which it reswitches downwards when the voltage VB has risen again to a predetermined level, typically 12.4 + 12.6 Volts. Thanks to this circuit, every time that the key or the switch Ch is on the ON position, monitoring of the battery capacity B is carried out through the voltage V'B, in such a way that when V'B persists for a certain time below the preset threshold, the relay RL2 is excited and the battery B is switched from the N+ node, position Z, to the D+ node, position W. If the motor vehicle's conditions of use are such that the alternator A has an excess of energy, the voltage supplied rises and the battery B receives a charge both through the resistor PTC2 and the network consisting of the diode D2 and the resistor PTC1, contact of the relay RL2 on the W position. The voltage VB rises above the threshold of 12.4 + 12.6 Volts and after an adequate period of time the comparators A1, A2 and the related drive circuit of the relay RL2 determine its de-energizing by reconnecting the battery B to the power node N+.

It follows therefore that the battery B is protected from excessive discharging and is therefore always at a capacity level sufficient to guarantee the ignition of the engine after a stop.

In the circuit there is furthermore represented the second group of comparators A3, A4 and a derived network C2, R9 which have the aim of switching back the battery B to the power node N+ every time the voltage of the node itself goes below the minimum voltage Vmin and of maintaining said situation for a suitable time. This is obtained through an output from A4 to the diode D6 which in this condition goes to zero for a short time, discharging the capacitor CI and thus determining the de-energizing of the relay RL2. This situation remains until the capacitor recharges to the value of the reference voltage VRif, after which the relay RL2 is reexcited, returning to the condition where the battery is switched to D+.

This function has been introduced to avoid the voltage in the node N+ from falling excessively whenever the battery is switched to D+ as might happen during the transient state of insertion of a heavy load, as the pick up of a motor fan etc.

In the circuit there is also shown the first relay RL1 which has the simple function of assuring, for preferred loads, as the injection, the ABS etc., a key reproduction from filtered feed voltage VB. In fact all the loads to the node N+, during conditions when the battery B is switched to D+, are fed directly by the rectified voltage of the alternator A, with the typical ripple of a three phase bridge.

The outlet CH', on the other hand, as is clear from the diagram, connects the preferred loads directly to the positive pole of the battery B and so to the voltage VB.

Finally, in figure 5 a third group is reproduced which operates through comparators A6, A7, A8, a divider circuit R13, R14, a timer circuit C3, R15, a derivative element C4, R16, a group R12, TR3 and a relay RL3, on the line which feeds the ever increasing number of memory circuits on a motor vehicle. Said circuits, for example door locks, clocks, seats with a memory etc., represent a load, even if modest, for the battery also with the vehicle at standstill and sometimes contribute to the discharging of the battery if the vehicle remains stationary for many days or months. The circuit reproduced above has the aim of disconnecting said loads through the contact of relay RL3, when the battery voltage VB, during prolonged stops, goes below a minimum level which could influence subsequent starting.

Said minimum level which corresponds to the signal V"B obtained through the resistive divider R13, R14, is compared to the reference level V'Rif, obtained using a Zener circuit (not described) which is analogous to the one which generates VRif but is fed by VB, so that if it goes below a determined level, the comparator A6 supplies a high voltage level which, through the timer circuit C3, R15, the comparator A7, the derivative circuit C4, R16, the forming circuit A8, generates a brief impulse, typically 50 + 100 ms, for to, RL3A winding, thus causing the opening of the contact of the relay RL3. In this way the battery B is totally isolated from any possible use which could cause further discharging.

The relay RL3, well-known in the market, is a mechanical holding relais driven by impulses. Generally it comprises two windings, the first RL3 for opening and the second RL3B for closure. Every time the winding RL3A receives an impulse, the relay RL3 opens and remains in said position even if said winding is no longer fed. Closure is determined analogically by sending an impulse to the closure winding RL3B.

Any other mechanical memory relay, that is with no consumption, can be used as an alternative to the relay RL3 described above.

The advantage of using this type of mechanical holding relay is due to the fact that in this way the consumption of energy, from the battery, to maintain the relay in the desired position when the car is at a standstill, is avoided. In this condition the only consumption by the proposed circuit is by the divider circuits R2, R3, R13, R14; by the not shown circuit which serve to generate the reference voltage V'Rif and by the comparators A6, A7, A8, which are the only ones to be fed directly by the battery voltage VB, the consumption of which can be kept below one milliampere.

From the diagram it can be clearly understood that as soon as the switch Ch is in the ON position, the relay RL3 is forced into the closure position, as the relative winding RL3B is fed directly by the car key and that therefore any variation in the voltage VB cannot cause its opening; said circuit monitors the state of the battery B and operates only when the key is not inserted, that is when the car engine is not running. Therefore, once the relay RL3 is opened by the control circuit of the battery charge state comprising the group A6, A7, A8 and relating components, it remains in this position until the ignition key is not inserted into the vehicle.

It will be observed that in this description express reference is made to alternators which provide a suitable triad of diodes for their excitation, which in figure 4 are shown by T. This arrangement is very common. There exist, however, arrangements of less common use which do not provide said triad of diodes for the alternator excitation, this being drawn directly from the battery.

For the latter solution, the device of this invention has no external connection to the excitation node D+, so it will only disconnect the battery from the load node, in the conditions foreseen by the control circuit which has been previously described. In this way the minimum charge of the battery is safeguarded anyway, but the alternator always works on derived excitation as in the feed characteristics of figure 2, less favourable than the case of separate excitation as in figure 3, which is the way the most common alternator diagrams, according to figure 1, work by means of the device provided by this invention.

## Claims

1. An electronic circuit of a device to guarantee that a battery (B) of a motor vehicle has the minimum charge reserve necessary to start an engine, through an ignition key (Ch), comprising:
- a feed circuit with a switching zone (X) for the switching of the battery (B) from a load node (N+) to the excitation node (D+) of an alternator (A) and vice-versa by means of a first relay (RL2);
- a control circuit comprising: two control groups respectively sensitive to first values of the battery voltage (VB) and the voltage at the load node (N+) for the switching of said first relay (RL2) of said switching zone (X), characterised by said first relay (RL2) being suitable to be switched into a first position (Z), in order to feed said load node (N+) from said battery (B) when the battery voltage (V_{B}) is above a first predetermined threshold on the voltage at the load node (N+) goes below a minimum and into a second position (W), in order to feed the excitation node (D+) of said alternator (A) from said battery (B) when the battery voltage (V_{B}) is below a second predetermined treshold, said switching zone (X) also comprising a plurality of diodes (D2, D3, D4) and a plurality of resistors (PTC1, PTC2), to eliminate voltage excursions during the switching of said first relay (RL2);
said control circuit further comprising:
- a third control group sensitive to a second value of the battery voltage (VB), suitable to operate a second relay (RL3) for the disconnection of loads from said load node (N+) in the case of the battery voltage going below a third predetermined threshold
- a fourth control group, which is connected to said ignition key (Ch), for the connection of preferred loads to the battery (B), by means of a third relay (RL1).

2. An electronic circuit according to claim 1, characterised in that said third relay (RL1) is suitable for feeding said preferred loads directly from the battery (B) of the motor vehicle, said preferred loads comprising electronic injection apparatus and ABS devices.

3. An electronic circuit according to claim 1, characterised in that a first control group of said two control groups comprises a protection circuit (D5, C0, Z1), a Zener diode (Z2) to generate a first reference voltage (VRif), two comparators (A1, A2) and a drive circuit (TR1, R8) of said first relay (RL2) of said switching zone (X), said comparators (A1, A2) being connected between themselves in a cascade connection, by means of a filter (R6, C1), which is capable of selecting and/or filtering the output signals from one (A1) of said two comparators (A1, A2) of said first control group.

4. An electronic circuit according to claim 3, characterised in that a second control group of said two control groups comprises two comparators (A3, A4), connected between said ignition key (Ch) and the input of one (A2) of said two comparators (A1, A2) of said first control group, said two comparators (A3, A4) of said second control group being connected between themselves in a cascade connection, by means of a derivative electric network (C2, R9), the output of one (A3) of said two comparators (A3, A4) of said second control group being connected, by means of a diode (D6), to the input of one (A2) of said two comparators (A1, A2) of said first control group.

5. An electronic circuit according to claim 4, characterised in that one (A3) of said two comparators (A3, A4) of said second control group is suitable for comparing the value of voltage existing at the ends of said ignition key (Ch) with a preset value of voltage constituting said minimum (Vmin).

6. An electronic circuit according to claim 5, characterised in that said two comparators (A3, A4) of said second control group are capable of switching back said first relay (RL2) to said first position (Z) when the value of voltage of said load node (N+) is below said preset value (Vmin) of voltage (Vmin) for a first fixed preset time and holding said first relay (RL2) in said first position (Z) for a second fixed preset time.

7. An electronic circuit according to claim 1, characterised in that said fourth control group is capable of switching said third relay (RL1) when the ignition key (Ch) of the motor vehicle is turned, the switching of said third relay (RL1) being controlled by a drive electronic circuit (TR4, R10).

## Patentansprüche

1. Elektronischer Schaltkreis einer Vorrichtung, die gewährleistet, daß eine Batterie (B) eines Kraftfahrzeugs die Mindestreserve an Ladung hat, um den Motor mittels eines Zündschlüssels (Ch) zu starten, umfassend:
- einen Erregerkreis mit einer Schaltzone (X) zum Schalten der Batterie (B) von einem Lastknoten (N+) zum Erregerknoten (D+) eines Wechselstromgenerators (A) und umgekehrt mittels eines ersten Relais (RL2);
- einen Steuerkreis, der zwei Steuergruppen umfaßt, die zum Schalten des ersten Relais (RL2) der Schaltzone (X) jeweils auf erste Werte der Batteriespannung (VB) und der Spannung am Lastknoten (N+) empfindlich reagieren,
dadurch gekennzeichnet,
daß das erste Relais (RL2) dazu geeignet ist, in eine erste Position (Z) geschaltet zu werden, um den Lastknoten (N+) von der Batterie (B) zu speisen, wenn die Batteriespannung (VB) über einem ersten vorbestimmten Schwellenwert liegt und die Spannung am Last knoten (N+) unter einen Minimalwert fällt, und daß das erste Relais in eine zweite Position (W) geschaltet werden kann, um den Erregerknoten (D+) des Wechselstromgenerators (A) von der Batterie (B) zu speisen, wenn die Batteriespannung (VB) unter einen zweiten vorbestimmten Schwellenwert fällt, wobei die Schaltzone (X) auch eine Vielzahl von Dioden (D2, D3, D4) und eine Vielzahl von Widerständen (PTC1, PTC2) enthält, um Spannungsabweichungen während des Schaltens des ersten Relais (RL2) auszuschließen; und daß der Steuerkreis des weiteren folgendes umfaßt:
- eine dritte Steuergruppe, die auf einen zweiten Wert der Batteriespannung (VB) empfindlich reagiert und die geeignet ist, ein zweites Relais (RL3) zum Trennen von Lasten von dem Lastknoten (N+) für den Fall zu betätigen, daß die Batteriespannung unter einen dritten vorbestimmten Schwellenwert fällt;
- eine vierte Steuergruppe, die mit dem Zündschlüssel (Ch) zum Anschließen bevorzugter Lasten an die Batterie (B) mittels eines dritten Relais (RL1) verbunden ist.

2. Elektronischer Schaltkreis nach Anspruch 1,
dadurch gekennzeichnet,
daß das dritte Relais (RL1) dazu geeignet ist, die bevorzugten Lasten direkt von der Batterie (B) des Kraftfahrzeugs zu speisen, wobei die bevorzugten Lasten elektronische Einspritzvorrichtungen und ABS-Vorrichtungen umfassen.

3. Elektronischer Schaltkreis nach Anspruch 1,
dadurch gekennzeichnet,
daß eine erste Steuergruppe der zwei Steuergruppen einen Schutzschaltkreis (D5, C0, Z1), eine Zenerdiode (Z2) zum Erzeugen einer ersten Referenzspannung (VRif), zwei Komparatoren (A1, A2) und einen Antriebsschaltkreis (TR1, R8) des ersten Relais (RL2) der Schaltzone (X) umfaßt, wobei die Komparatoren (A1, A2) in einer Stufenschaltung mittels eines Filters (R6, C1) miteinander verbunden sind, der die Ausgangssignale von einem (A1) der beiden Komparatoren (A1, A2) der ersten Steuergruppe auswählen und/oder filtern kann.

4. Elektronischer Schaltkreis nach Anspruch 3,
dadurch gekennzeichnet,
daß eine zweite Steuergruppe der zwei Steuergruppen zwei Komparatoren (A3, A4) umfaßt, die zwischen dem Zündschlüssel (Ch) und dem Eingang eines (A2) der beiden Komparatoren (A1, A2) der ersten Steuergruppe verbunden sind, wobei die zwei Komparatoren (A3, A4) der zweiten Steuergruppe in einer Stufenschaltung mittels eines elektrischen Differentialnetzes (C2, R9) miteinander verbunden sind, wobei der Ausgang eines (A3) der zwei Komparatoren (A3, A4) der zweiten Steuergruppe mittels einer Diode (D6) mit dem Eingang eines (A2) der zwei Komparatoren (A1, A2) der ersten Steuergruppe verbunden ist.

5. Elektronischer Schaltkreis nach Anspruch 4,
dadurch gekennzeichnet,
daß einer (A3) der zwei Komparatoren (A3, A4) der zweiten Steuergruppe dazu geeignet ist, den an den Enden des Zündschlüssels (Ch) bestehenden Spannungswert mit einem festgesetzten Spannungswert zu vergleichen, der den Mindestwert (Vmin) darstellt.

6. Elektronischer Schaltkreis nach Anspruch 5,
dadurch gekennzeichnet,
daß die zwei Komparatoren (A3, A4) der zweiten Steuergruppe in der Lage sind, das erste Relais (RL2) in die erste Position (Z) zurückzuschalten, wenn der Spannungswert des Lastknotens (N+) eine erste festgesetzte Zeit lang unter einen festgesetzten Spannungswert (Vmin) fällt, und das erste Relais (RL2) eine zweite festgesetzte Zeit lang in dieser ersten Position (Z) zu halten.

7. Elektronischer Schaltkreis nach Anspruch 1,
dadurch gekennzeichnet,
daß die vierte Steuergruppe in der Lage ist, das dritte Relais (RL1) zu schalten, wenn der Zündschlüssel (Ch) des Kraftfahrzeugs gedreht wird, wobei das Schalten des dritten Relais (RL1) von einem elektronischen Antriebsschaltkreis (TR4, R10) gesteuert wird.

## Revendications

1. Circuit électronique d'un dispositif pour garantir qu'une batterie (B) d'automobile présente la réserve de charge minimale nécessaire pour démarrer un moteur, par l'intermédiaire d'un clé de contact (Ch). comprenant :
- un circuit d'alimentation avec une zone de commutation (X) pour la commutation de la batterie (B) entre un noeud de charge (N+) et le noeud d'excitation (D+) d'un alternateur (A) et inversement au moyen d'un premier relais (RL2) :
- un circuit de commande comprenant deux groupes de commande respectivement sensibles à des premières valeurs de tension de la batterie (VB) et à la tension au niveau du noeud de charge (N+) pour la commutation dudit premier relais (RL2) de ladite zone de commutation (X). caractérisé par ledit premier relais (RL2) approprié pour être commuté dans une première position (Z), afin d'alimenter ledit noeud de charge (N+) par ladite batterie (B) lorsque la tension de la batterie (V_{B}) est au-dessus d'un premier seuil prédéterminé ou que la tension au niveau du noeud de charge (N+) descend en dessous d'une valeur minimale et dans une seconde position (W), afin d'alimenter le noeud (D+) dudit alternateur (A) par ladite batterie (B) lorsque la tension de la batterie (V_{B}) est en dessous d'un second seuil prédéterminé, ladite zone de commutation (X) comprenant également une pluralité de diodes (D2, D3, D4) et une pluralité de résistances (PTC1, PTC2) afin d'éliminer des excursions de tension lors de la commutation dudit premier relais (RL2) ;
ledit circuit de commande comprenant en outre :
- un troisième groupe de commande sensible à une seconde valeur de la tension de la batterie (VB), adapté pour actionner un deuxième relais (RL3) pour la déconnexion de charges dudit noeud de charge (N+) dans le cas où la tension de la batterie descend en dessous d'un troisième seuil prédéterminé
- un quatrième groupe de commande qui est connecté audit contact d'allumage (Ch), pour la connexion de charges préférées à la batterie (B), au moyen d'un troisième relais (RL1).

2. Circuit électronique selon la revendication 1, caractérisé en ce que ledit troisième relais (RL1) est approprié pour alimenter lesdites charges préférées directement à partir de la batterie (B) de l'automobile, lesdites charges préférées comprenant un appareil à injection électronique et des dispositifs ABS.

3. Circuit électronique selon la revendication 1, caractérisé en ce qu'un premier groupe de commande desdits deux groupes de commande comprend un circuit de protection (D5, C0, Z1), une diode de Zener (Z2) afin de générer une première tension de référence (Vrif), deux comparateurs (A1, A2) et un circuit d'attaque (TR1, R8) dudit premier relais (RL2) de ladite zone de commutation (X), lesdits comparateurs (A1, A2) étant connectés entre eux dans une connexion en cascade. au moyen d'un filtre (R6, C1) pouvant sélectionner et/ou filtrer les signaux de sortie de l'un (A1) desdits deux comparateurs (A1, A2) dudit premier groupe de commande.

4. Circuit électronique selon la revendication 3, caractérisé en ce qu'un second groupe de commande desdits deux groupes de commande comprend deux comparateurs (A3, A4), connectés entre ladite clé de contact (Ch) et l'entrée d'un (A2) desdits deux comparateurs (A1, A2) dudit premier groupe de commande, lesdits deux comparateurs (A3, A4) dudit second groupe de commande étant connectés entre eux dans une connexion en cascade, au moyen d'un réseau électrique dérivé (C2, R9), la sortie d'un (A3) desdits deux comparateurs (A3, A4) dudit second groupe de commande étant connectée, au moyen d'une diode (D6), à l'entrée d'un (A2) desdits deux comparateurs (A1, A2) dudit premier groupe de commande.

5. Circuit électronique selon la revendication 4, caractérisé en ce qu'un (A3) desdits deux comparateurs (A3, A4) dudit second groupe de commande est approprié pour comparer la valeur de tension existant aux extrémités dudit contact d'allumage (Ch) avec une valeur de tension prédéfinie constituant ledit minimum (Vmin).

6. Circuit électronique selon la revendication 5, caractérisé en ce que lesdits deux comparateurs (A3, A4) dudit second groupe de commande peuvent commuter en retour ledit premier relais (RL2) sur ladite première position (Z) lorsque la valeur de tension dudit noeud de charge (N+) est en dessous de ladite valeur prédéfinie (Vmin) de tension (Vmin) pendant un premier temps prédéfini fixe et en maintenant ledit premier relais (RL2) dans ladite première position (Z) pendant un second temps prédéfini fixe.

7. Circuit électronique selon la revendication 1, caractérisé en ce que ledit quatrième groupe de commande peut commuter ledit troisième relais (RL1) lorsque la clé de contact (Ch) de l'automobile est tournée, la commutation dudit troisième relais (RL1) étant commandée par un circuit électronique d'attaque (TR4, R10).
